Europäisches Patentamt

European Patent Office

Office européen des brevets

(11) Publication number : 0 454 482 A1

(12) # EUROPEAN PATENT APPLICATION

(21) Application number : 91303794.1

(22) Date of filing : 26.04.91

(51) Int. Cl.⁵ : **A01N 57/12, A01N 59/26, C09K 3/18**

(30) Priority : 27.04.90 US 515101

(43) Date of publication of application :
30.10.91 Bulletin 91/44

(84) Designated Contracting States :
AT BE CH DE DK ES FR GB GR IT LI LU NL SE

(71) Applicant : RHONE-POULENC AGROCHIMIE
14-20, rue Pierre Baizet
F-69009 Lyon (FR)

(72) Inventor : HANRAHAN, Richard, K.
2009 Inverness Court
Raleigh, North Carolina, (US)
Inventor : BARR, Garland, G.
HCR 15C
El Campo, Texas 77437 (US)

(74) Representative : Bentham, Stephen et al
J.A. Kemp & Co. 14 South Square Gray's Inn
London, WC1R 5LX (GB)

(54) Treatment of plants for frost protection.

(57) A method of controlling frost damage at a locus in which plants are growing, which comprises applying to the plants from 0.5 to 5 kg/ha of a compound of formula (I)

$$[R-O-PH(=O)-O]_n M \qquad (I)$$

wherein
R is a hydrogen atom or an alkyl radical of 1 to 4 carbon atoms ;
M is a hydrogen atom, or an alkali, alkaline earth, or aluminium metal atom ;
and
n is an integer which is equal to the valence of M.

EP 0 454 482 A1

Jouve, 18, rue Saint-Denis, 75001 PARIS

The present invention relates to a method of controlling frost damage at a locus in which plants are growing.

It is well known that frost is able to severely damage many kinds of crops. However, the fact is that in cold or temperate climate zones, frosts frequently occur so that farmers take into account this risk as a matter of routine, and hence crops which are most sensitive to frost are not cultivated. The consequence is that the crops where the frost risk is the highest are in or near semi tropical areas. Citrus is an example of such a crop. Frosts occur infrequently in semi tropical areas, such as citrus growing areas, and thus the majority of growers in such areas are not equipped to deal with the problem. When frosts occur therefore in such areas the losses can be considerable. Even if such a frost happens only once every 5 to 10 years, the damage can be catastrophic since a complete citrus orchard can be destroyed.

As a consequence, it is highly desirable to have some means of protecting plants, especially crops and orchards, against frost.

It has been recently discovered that frost damage is increased by the action of certain bacteria which promote ice crystal formation and development. Such bacteria are normally not phytotoxic or phytopathogenic, so that no information can be obtained from the existing means of control of phytotoxic or phytopathogenic bacteria diseases.

A further problem is that it can be very difficult to learn anything about the control of bacteria under field conditions because field experimentation upon bacteria is sometimes regulated and forbidden.

The present invention therefore seeks to provide a method of controlling frost damage at a locus in which plants are growing, for example orchards, for instance in which citrus crops are growing.

It further seeks to provide such a method which is non-phytotoxic to the treated plants and a method which controls bacteria which are non-phytopathogenic to the treated plants but which promote the formation and development of ice crystals, and increase frost damage.

Accordingly the present invention provides a method of controlling front damage at a locus in which plants are growing, which comprises applying to the plants from 0.5 to 5 kg/ha, preferably 1 to 5 kg/ha and more preferably 2 to 4 kg/ha, of a compound of formula (I)

$$[R-O-PH(=O)-O]_nM \qquad (I)$$

wherein

R is a hydrogen atom or an alkyl radical of 1 to 4 carbon atoms,

M is a hydrogen atom or an alkali, alkaline earth, or aluminium metal atom, and n is an integer which is equal to the valence of M; optionally the different M being different when n is greater than 1.

The method of the present invention relates to the treatment of plants which are under actual or potential frost attack.

Compounds of formula (I), in which R is a methyl or ethyl group, especially an ethyl group, are preferred. Also preferred are those compounds of formula (I) in which M is a metal atom, especially an aluminium atom.

A particularly preferred compound of formula (I) is aluminium tris-[O-ethylphosphonate], also known as fosetyl-Al.

According to one particular embodiment, a locus in which citrus trees are growing, such as a citrus orchard, is treated. Such a locus may, for example, contain orange, grapefruit or lemon trees.

Examples of other plants which may be treated according to the method of the present invention include vegetable and salad crops (such as beans, cole crops, potatoes, curcurbits, lettuce, onions, tomatoes and peppers), trees in orchards and groves (such as those growing stones and pip fruits, kiwifruit, avocados, mangos, olives and walnuts), ornamental plants, flowers and shrubs.

According to a feature of the invention, when the plants to be protected are for example a citrus crop, the treatment is made before the frost season, that is to say at the end of autumn or at the beginning of winter, generally from the beginning of the last month of autumn to the end of the first month of winter. It will be appreciated, however, that the time of year at which the treatment is performed will depend upon the type of plant being protected.

Typically, treatment according to the invention is performed only once but it can be repeated as frequently as desired; it may be particularly desirable repeat treatment after rain. If no rain falls, no substantial advantage is likely to be obtained by use of multiple treatments.

Protection according to the invention is particularly valuable against frost at from 0 to -5°C (32 to 23°F) or still lower temperatures.

Prior to treatment, a locus will generally be assessed to determine the need for frost protection.

The treatment according to the present invention may be applied pre- or post-emergence of the plants growing in the locus. Preferably the treatment is a post-emergence treatment.

The treatment is typically made by spraying the foliar canopy (including any flowers that may be present). The compound or compounds of formula (I) may be in any conventional form which is suitable for spraying. For instance they may be prepared from a wettable or soluble powder, an emulsifiable concentrate or a flowable suspension. Most typically a wettable powder comprising one or more compounds of formula (I) will be used to provide the compounds in a form which is suitable for spraying.

The present invention is further illustrated by the following examples.

## EXAMPLE 1

An orange fruit orchard was treated once in November. Frost conditions occurred in January. No rainfall occurred between the time of treatment and the frost time.

The treatment according to the invention was made using aluminium tris-[O-ethylphosphonate] (designated hereafter as fosetyl-Al) in the form of a wettable powder. The concentration of fosetyl-Al in the spray suspension was 4500 ppm, which corresponds to an application rate of 4.5 kg/ha of active ingredient. After treatment, the plants were allowed to dry.

To make a comparison, a similar treatment was made with copper hydroxide at the normal rate of 2.24 kg/ha of metallic copper (a higher rate cannot be used because of the phytotoxic effect of the copper hydroxide).

The results obtained are presented in Table 1. The external frost injury on fruits was observed and the results are expressed as the percent reduction of fruit injury.

### TABLE 1

| Protective Agent | Percent reduction of all injuries | Percent reduction of severe injuries | Percent of reduction of internal injuries |
|---|---|---|---|
| fosetyl-Al | 53 | 82 | 50 |
| $Cu(OH)_2$ | 40 | 64 | 100 |

## EXAMPLE 2

A potato crop was treated 5 days after emergence when the plants were 20 cm tall and had 3-5 leaves.

The treatment was carried out with spray suspension prepared from fosetyl-Al formulated as a wettable powder containing 80% by weight of active ingredient. The concentration of the active ingredient in the suspension was 5000 ppm, which corresponds to an application rate of 4.5 kg/ha of active ingredient.

Eleven days after treatment of frost occurred when the temperature went down to -3.3°C.

The extent of frost damage was measured 3 days later compared with untreated potato plants used as a check.

Under these conditions a reduction of 28% of the frost damage was observed on the treated plants.

## Claims

1. A method of controlling frost damage at a locus in which plants are growing, which comprises applying to the plants from 0.5 to 5 kg/ha of a compound of formula (I)

$$[R-O-PH(=O)-O]_nM \qquad (I)$$

wherein

R is a hydrogen atom or an alkyl radical of 1 to 4 carbon atoms;

M is a hydrogen atom, or an alkali, alkaline earth, or aluminium metal atom;

and

n is an integer which is equal to the valence of M.

2. A method according to claim 1, wherein the compound of formula (I) is applied at a rate of from 2 to 4 kg/ha.

3. A method according to claim 1 or 2 wherein the plants are citrus trees.

4. A method according to claim 3 wherein the locus is an orchard in which citrus trees are growing.

5. A method according to any one of the preceding claims wherein the locus is treated before the frost season.

6. A method according to claim 5 wherein the locus is treated in the last month of autumn or in the first month of winter.

7. A method according to claim 5 or 6, wherein the locus is treated only once and optionally treatment is repeated after rain.

8. A method according to any one of the preceding claims wherein the locus is treated by spraying the foliar canopy.

9. A method according to any one of the preceding claims in which in the compound of formula (I) R is an ethyl group.

10. A method according to any one of the preceding claims in which in the compound of formula (I), M is an aluminium atom.

11. A method according to claim 10, wherein the compound of formula (I) is aluminium tris-[O-ethyl phosphonate].

EP 0 454 482 A1

**European Patent Office**

# EUROPEAN SEARCH REPORT

Application Number

EP 91 30 3794

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | US-A-4 834 899 (R.R. KLEVECZ) <br> * The whole document * | 1-11 | A 01 N 57/12 <br> A 01 N 59/26 <br> C 09 K 3/18 |
| Y | EP-A-0 249 566 (RHONE-POULENC AGROCHIMIE) <br> * Page 2, lines 3-58; page. 3, lines 10-24 * | 1-11 | |
| A | PATENT ABSTRACTS OF JAPAN, vol. 13, no. 275 (C-610)[3623], 23rd June 1989; & JP-A-1 70 407 (SDS BIOTECH. K.K.) 15-03-1989 <br> * Whole abstract * & CHEMICAL PATENTS INDEX, DOCUMENTATION ABSTRACTS JOURNAL, section C, AGROCHEMICALS, 21st June 1989, accession no. 89-125491/17, Derwent Publications Ltd, London, GB * Whole abstract * | 1-11 | |
| A | WO-A-8 402 448 (UNIVERSITY PATENTS INC.) <br> * Page 3, line 28 - page 4, line 22; page 6, lines 17-35 * | 1-11 | TECHNICAL FIELDS SEARCHED (Int. Cl.5) <br><br> A 01 N <br> C 09 K |
| A | EP-A-0 074 718 (THE REGENTS OF THE UNIVERSITY OF CALIFORNIA) <br> * Page 1 - page 3, line 11 * | 1-11 | |
| A | EP-A-0 037 593 (SHELL INTERNATIONAL RESEARCH MIJ. B.V.) <br> * Page 1 - page 2, paragraph 1 * | 1-11 | |
| A | EP-A-0 115 466 (RHONE-POULENC AGROCHIMIE) <br> * Page 1, lines 1-31; page 12, line 33 - page 14, line 17; claims 1,8,9 * <br> ---          -/- | 1-11 | |

The present search report has been drawn up for all claims

| Place of search | Date of completion of the search | Examiner |
|---|---|---|
| THE HAGUE | 30-07-1991 | MUELLNERS W. |

**European Patent Office**

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | DE-A-3 643 102  (BORSODI VEGY KOMBINAT) <br> * Page 2, lines 1-65; example 11 * | 1-11 | |
| | | | **TECHNICAL FIELDS SEARCHED (Int. Cl.5)** |

The present search report has been drawn up for all claims

| Place of search | Date of completion of the search | Examiner |
|---|---|---|
| THE HAGUE | 30-07-1991 | MUELLNERS W. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)